# EUROPEAN PATENT APPLICATION

(11) **EP 2 062 479 A1**
(43) Date of publication of application: **27.05.2009**
(21) Application number: 07805858.3
(22) Date of filing: 14.09.2007
(51) Int. Cl.: A23F 5/24

(54) **COFFEE DRINK PACKED IN CONTAINER AND METHOD OF PRODUCING THE SAME**

(30) Priority: 15.09.2006 JP 2006251716; 29.09.2006 JP 2006267812
(71) Applicant: ITO EN, LTD., Tokyo 151-8550 (JP)
(72) Inventor: ASANUMA, Toshinori, Makinohara-shi Shizuoka 421-0516 (JP); OKANOYA, Kazunori, Makinohara-shi Shizuoka 421-0516 (JP); TSUKAMOTO, Tsutomu, Makinohara-shi Shizuoka 421-0516 (JP); OCHI, Takayuki, Makinohara-shi Shizuoka 421-0516 (JP); MATSUMOTO, Nobuo, Makinohara-shi Shizuoka 421-0516 (JP); TAKUMA, Motohiko, Makinohara-shi Shizuoka 421-0516 (JP)
(74) Representative: Gille Hrabal Struck Neidlein Prop Roos
(86) International application number: PCT/JP2007/001004
(87) International publication number: WO 2008/032452

(57) **Abstract**

The present invention provides a coffee drink packed in container with improved taste and flavor, a coffee drink packed in container in which deterioration of taste and flavor has been suppressed and which is appropriate for long term conservation, and producing methods thereof. In addition the present invention can provide a coffee drink packed in container containing 2-methylfuran, 2-methylbutanal and 3-methylbutanal, which are aroma components, and having improved taste and flavor, a coffee drink packed in container in which diminution of 2-methylfuran, 2-methylbutanal and 3-methylbutanal is prevented, and thus deterioration taste and flavor is suppressed, and producing methods thereof.

## Description

### [Technical Field]

The present invention relates to a coffee drink packed in container characterized by improved taste and flavor, and method of producing the same. In addition, the present invention relates to a producing method for a coffee drink packed in container whereby deterioration of aroma component with age is suppressed by adjusting the liquid temperature of the coffee drink within a given range to fill a container.

Coffee drinks are enjoyed by many people as one among highly palatable drinks. Since coffee drinks packed in container allow coffee drinks to be enjoyed conveniently at any time, consumer needs expanded owing to the convenience thereof. In order to respond to the needs, coffee drinks packed in container from industrially prepared coffee drinks are on the market in large numbers.

Due to the authenticity-orientation of consumers in recent years, coffee drinks packed in container are strongly in demand, having improved taste and flavor compared to conventional products. Although adding various additives and flavor ingredients is thought to be the easiest method for improving the taste and flavor of coffee drinks packed in container, there is the problem that unnatural taste and flavor of the additives and flavor ingredients remain. Thereofe, a variety of improvements have been made so far in the producing process with the purpose of improving the taste and flavor of coffee drinks.

For instance, a producing method for a coffee drink obtained by insufflating hot air from 450°C to 520°C for 15 minutes to 25 minutes in the coffee bean roasting step to intensify the flavor of the coffee beans has been described (Patent Reference 1).

In addition, a producing method for obtaining a flavorful coffee drink without excessively eluting oil component of the coffee beans whereby, in a roasted coffee bean grinding step, the flavor components of the coffee beans are efficiently collected without being dispersed in the air at grinding has been described (Patent Reference 2).

Moreover, coffee drink producing method whereby, in a coffee extraction step, roasted and ground coffee beans are extracted with milk and then extracted with hot water to allow the coffee aroma component to be obtained at the same time as savoriness and bitterness to be extracted has been described (Patent Reference 3).

Further, a producing method for a coffee solution whereby a plurality of types of roasted coffee bean powders having different flavors are extracted in multiple stages for each coffee bean powder to use the distinctive tastes of the various coffee beans has been described (Patent Reference 4).

The inventions described in the above prior art references can be considered to have had an effect in improving the taste and flavor of coffee drinks packed in container. However, these inventions do not specify the constituents involved in the taste and aroma, such that the scope thereof is limited when applying the content of the invention. Thus, a novel coffee drink packed in container with improved taste and flavor and a producing method thereof, which are different from the inventions described in the above prior art references, are still desired.

Meanwhile, coffee drinks packed in container excel on the point that they allow coffee drinks to be enjoyed conveniently at any time. However, due to considerable time elapsing between producing and drinking, one important issue so far has been to minimize deterioration of taste and flavor due to time in the product. A variety of improvement has been made in order to suppress as much as possible such deterioration due to time to retain the taste and flavor at the time of producing.

As a coffee producing method for suppressing the deterioration of taste and flavor of a coffee drink, a coffee producing method is known, whereby the coffee powder is extracted, for instance, under an inert gas atmosphere, with deoxygenated hot water or the like (Patent Reference 5). In addition, excellent coffee drink with visually little oxidation deterioration is known, by producing under deoxygenating condition the entirety of the process in coffee producing, from extraction to filling (Patent Reference 6). In addition, a producing method for a drink packed in container achieving more effectively the contradictory tasks of decreasing the amount of acid inside the container and stabilizing the internal pressure, concretely, a producing method for a drink packed in container whereby filling is at 15 to 45°C for a milk-containing drink and at 30 to 45°C for black coffee is known (Patent Reference 7).

[Patent Reference 1] Japanese Patent Application Laid-open No. 2000-217514
[Patent Reference 2] Japanese Patent Application Laid-open No. 2000-333612
[Patent Reference 3] Japanese Patent Application Laid-open No. H 10-136892
[Patent Reference 4] Japanese Patent Application Laid-open No. 2006-014645
[Patent Reference 5] Japanese Patent Application Laid-open No. H6-141776
[Patent Reference 6] Japanese Patent Application Laid-open No. 2003-284496
[Patent Reference 7] Japanese Patent Application Laid-open No. 2006-25738

### [Disclosure of the Invention]

### [Issues to be addressed by the Invention]

An object of the present invention is to provide a coffee drink packed in container characterized by improved taste and flavor, and a producing method thereof. In addition, an object of the present invention is to provide a producing method for a coffee drink packed in container whereby deterioration of aroma component with age is suppressed by adjusting the liquid temperature of the coffee drink within a given range to fill a container.

### [Means to Address the Issues]

As a result of earnest studies, the present inventors discovered that taste and flavor of a coffee drink become satisfactory if specific flavor components in a coffee drink, concretely, 2-methylfuran, 2-methylbutanal and 3-methylbutanal, remain more abundantly. In addition, they discovered that, although there is the problem that the aroma component content in a coffee drink decreases when a coffee drink is produced by conventional methods, such decrease in aroma component content can be suppressed by filling a container at a lower temperature than conventional methods with coffee drink obtained by extracting coffee using degassed water and adding water and the like.

In addition, the present inventors discovered that deterioration with age of components involved in taste and flavor could be suppressed by adjusting the liquid temperature of the coffee drink within a given range to fill the container. Concretely, they discovered that deterioration of taste and flavor could be suppressed when the extent of the decrease with age of 2-methylfuran, 2-methylbutanal and 3-methylbutanal, which are specific aroma components contained in the coffee drink packed in container, was small compared to the extent of decrease with age of other aroma components, and 2-methylfuran, 2-methylbutanal and 3-methylbutanal remain abundantly.

That is to say, the present invention, when described in detail, relates to the following:
(1) a coffee drink packed in container containing 2-methylfuran, 2-methylbutanal and 3-methylbutanal, and characterized by improved taste and flavor,
(2) a coffee drink packed in container containing 11.5 to 15.5 of 2-methylfuran, 7.5 to 11.0 of 2-methylbutanal and 4.5 to 7.0 of 3-methylbutanal in relative ratios when the peak surface of the internal standard substance (5µl of 0.1 % cyclohexanol) is unity in the SPME method,
(3) a coffee drink packed in container as described in (1) or (2) above, in which, in the step of filling a container with a coffee drink, the container is filled at a liquid temperature of coffee drink in the range of 10 to 70°C, and the quantity of dissolved oxygen in the coffee drink packed in container is 0.37 to 0.44mg/L,
(4) a producing method for a coffee drink packed in container whereby a container is filled at a liquid temperature of coffee drink in the range of 10 to 70°C to suppress deterioration of aroma components,
(5) a producing method for a coffee drink packed in container wherein the aroma component is one species or two species or more chosen from the group comprising 2-methylfuran, 2-methylbutanal and 3-methylbutanal,
(6) a method whereby, in the step of filling a container with a coffee drink, the container is filled at a liquid temperature of coffee drink in the range of 10 to 70°C, and the quantity of dissolved oxygen of the coffee drink packed in container is brought to 0.37 to 0.44mg/L to improve the taste and flavor of a coffee drink, and
(7) a method for suppressing deterioration of a coffee drink packed in container, whereby a container is filled at a liquid temperature of the coffee drink in the range of 10 to 70°C.

According to the present invention, a coffee drink packed in container having improved taste and flavor and a producing method thereof can be provided. In addition, according to the present invention, a producing method for a coffee drink packed in container in which deterioration with age of aroma components, concretely, 2-methylfuran, 2-methylbutanal and 3-methylbutanal, has been suppressed by adjusting the liquid temperature of the coffee drink within a given range to fill a container, can be provided.

### [Mode for Carrying out the Invention]

Approximately 800 species of aroma components are said to exist for coffee, and a large number of components that are involved in improvement of taste and aroma of coffee are known. For instance, aldehydes, esters, furans, ketones, alcohols, pyrazines, pyrroles, pyridines, sulphur compound and the like are known as aroma components of coffee; however how these aroma components are involved in generating aroma of a coffee drink is not really clear. Although a variety of aroma components are included in the coffee drink packed in container of the present invention, the coffee drink packed in container of the present invention is one containing 2-methylfuran, 2-methylbutanal and 3-methylbutanal, and having improved taste and aroma.

The content in 2-methylfuran, 2-methylbutanal and 3-methylbutanal in the coffee drink packed in container of the present invention is not limited in particular as long as the taste and flavor of the coffee drink packed in container are improved. Taking into consideration the various conditions in the producing process for the coffee drink packed in container, coffee drink packed in container preferably contains 11.5 to 15.5, preferably 13.5 to 15.0 and more preferably 14.0 to 15.0 of 2-methylfuran, 7.5 to 11.0, preferably 9.0 to 11.0 and more preferably 9.5 to 11.0 of 2-methylbutanal, and 4.5 to 7.0, preferably 5.0 to 7.0 and more preferably 6.0 to 7.0 of 3-methylbutanal in relative ratio when the peak surface of the internal standard substance (5µl of 0.1 % cyclohexanol) is unity in the SPME method (solid phase microextraction).

Note that, although the methods for measuring the above three components are not limited in particular, the SPME method (:solid phase microextraction) is used as extraction method in the present invention. The SPME method, in which an adsorbent is coated on the portion corresponding to the needle of a syringe, allowing a headspace gas to be adsorbed and then thermally desorbed directly at the injection port of a gas chromatograph, is simple and has high reproducibility.

In addition, the internal standard method is used as the quantification method. When carrying out component analysis in general, accidental errors occur due to various factors; for instance, recovery errors during sample pretreatment such as extraction and purification, injection errors into analysis device, and errors between devices may be cited. The internal standard method adds a given amount of a compound (internal standard substance) to each sample and uses the ratio between each component and the internal standard substance for quantification, thereby preventing influences due to these errors during measurements to improve the accuracy of the quantification values, and thus is broadly used.

In general, in a component analysis by a chromatographic method, the peak surface on an obtained chromatograph is proportional to the quantity of each component. In the present invention, it is the relative ratio when the peak surface of the internal standard substance (5µl of 0.1 % cyclohexanol) is unity.

The coffee drink packed in container of the present invention includes coffee drinks packed in container that have been enhanced by combining 2-methylfuran, 2-methylbutanal and 3-methylbutanal, and other components. The origins of 2-methylfuran, 2-methylbutanal and 3-methylbutanal are not limited in particular, and these components can be suitably mixed to enhance the taste and aroma of the coffee drink.

The species of coffee beans used in the present invention are not limited in particular. Although Arabica species and Robusta species exist as coffee varieties, concretely, Brazil, Colombia, Kilimanjaro, Mocha and the like, which are Arabica species, are preferably used. In addition, these may be used alone, or may be used by suitably blending a plurality of species. In addition, Indonesia, Vietnam and the like, which are Robusta species, may also be used by blending or the like with the Arabica species.

When producing the coffee drink packed in container of the present invention, it suffices to carry out roasting of the coffee beans by conventional methods, and it suffices to adjust suitably the degree of roasting according to the desired taste or the like. In general, dark roasting leads to strong bitterness, and light roasting leads to strong sourness. L values of roasted coffee beans in the present invention are not limited in particular, for instance, L values of 30 to 27, preferably L values of 26 to 24, more preferably 23 to 21, and even more preferably L values of 20 to 18 are preferred from the point of taste. L value here is a value that serves as an index of the lightness, and can measure roasted coffee beans as conventional methods using the colorimetric spectroscope SE2000 (Nippon Denshoku Industries Co., Ltd.).

When producing the coffee drink packed in container of the present invention, it suffices to carry out grinding of the coffee beans by conventional methods, and it suffices to adjust suitably the degree of grinding according to the desired taste or the like.

When producing the coffee drink packed in container of the present invention, it suffices to extract the roasted coffee beans and or grounds thereof according to conventional methods with water, warm water or hot water, the water used not being limited in particular. For water used in the extraction and mixing, pure water, hard water, soft water and ion exchanged water, aqueous solutions containing ascorbic acid and pH-adjusted water or the like, can be given as examples; in addition, degassed water resulting from degassing of these waters for use can be used adequately.

In order to produce stably the coffee drink packed in container in the present invention, bringing the liquid temperature at container filling to 10 to 70°C, preferably 10 to 50°C, more preferably 30 to 50°C, and most preferably to temperatures above 45°C and 50°C or less, is preferred from the point of taste and flavor.

The coffee drink packed in container of the present invention can be added further with an oxidation inhibitor, a pH adjuster, a flavor and the like. As oxidation inhibitors, ascorbic acid or a salt thereof, erythorbic acid or a salt thereof, vitamin E and the like, may be cited, and among these, ascorbic acid or a salt thereof is more preferable. As pH adjusters, ascorbic acid, sodium bicarbonate and the like are used, and for flavor, natural flavors and synthetic flavors can be used.

The coffee drink packed in container of the present invention may contain carbohydrates. As carbohydrates sweeteners such as, sucrose, glucose, fructose, xylose, fructose-glucose syrup and sugar alcohol, and cyclodextrins or the like may be cited. Among these, sweeteners such as sucrose and sugar alcohol are more preferable. In addition, these carbohydrates also include those derived from coffee bean extracts or the like.

From the point of view of the taste, the content in these carbohydrates per drink packed in container is 0.01 to 30.00 percent in weight, more preferably 0.01 to 20.00 percent in weight, even more preferably 0.50 to 15.00 percent in weight, and particularly preferably 1.80 to 10.00 percent in weight.

In addition, the coffee drink packed in container of the present invention may contain milk component. As milk components, raw milk, sterilized milk, powdered whole milk, powdered nonfat milk, fresh cream, concentrated milk, nonfat milk, partially nonfat milk, condensed milk and the like may be cited. In addition, as emulsifying agent, sucrose fatty acid esters, sorbitan fatty acid esters, polyglycerol fatty acid esters, fatty acid glycerides, lecithins may be cited.

The containers used in the present invention are not limited in particular restriction. For instance, PET bottle, cans made of aluminum, steel and the like, bottle made from paper, retort pouch, glass and the like.

Methods for sterilizing the coffee drink packed in container in the present invention are carried out with sterilization conditions defined by Japanese food sanitation laws in cases where heat sterilization is possible after the container is filled, such as in the case with metallic cans. Those for which retort sterilization is not possible, such as with PET bottles and paper containers, methods with sterilization conditions equivalent to the conditions defined by Japanese food sanitation laws, for instance with a plate-type heat exchanger, at high temperature for a short time, cooling to a given temperature to fill the container, can be adopted. In addition, manipulations such as, after heat sterilization, reverting the pH to neutral under sterile conditions, or, after heat sterilization under neutral conditions reverting the pH to acidic under sterile conditions, are possible.

The quantity of dissolved oxygen for the coffee drink packed in container in the present invention, using degassed water or the like, is 0.37 to 0.44mg/L, preferably 0.41 to 0.44mg/L, and more preferably 0.42 to 0.44mg/L.

### [Example]

Hereinafter, the present invention will be described concretely giving examples; however, the present invention is not limited by these.

### Example 1: Diminution of suppression effects of Coffee aroma component

### (Mixing)

Respectively, coffee beans for extraction comprising 100% Brazil-produced coffee beans (L=18.0) (hereinafter referred to a single product) and coffee beans for extraction in which 80% Brazil-produced coffee beans (L=18.0) and 20% Brazil-produced coffee beans (L=31.5) were blended (hereinafter referred to a blended product) have been prepared. Respectively, 400g of the above coffee beans for extraction was drip extracted at 90°C by adding 3600ml of degassed water corresponding to nine times the weight of the coffee beans to obtain 2800ml of coffee extract corresponding to seven times the weight of the coffee beans. Thereafter, the respective coffee extracts were cooled until 30°C was reached, degassed water was further added so that the coffee solid content in the coffee extract was 1.5%, 0.05 percent in weight of sodium bicarbonate was added and mixed to obtain the respective coffee mix solutions.

### (Filling)

The respective coffee mix solutions obtained above were cooled or heated to 10°C, 30°C, 50°C, 70°C and 90°C, and after each temperature was reached, were maintained for 5 minutes, then were filled in can containers (190ml capacity) and the can containers were seemed to obtain the respective coffee drinks packed in container.

### (Sterilization)

The respective coffee drinks packed in container obtained above were retained further at room temperature for 15 minutes, then, retort sterilized at 121°C for 10 minutes. After retort sterilization and cooling to ordinary temperature, pH, Brix, quantity of dissolved oxygen of the respective products were measured (Table 1 and Table 2). In addition, aroma components of the respective products were analyzed according to the analytical methods below (Table 3 and Table 4). For the above aroma components, calculation was performed in relative ratio with the peak surface when coffee extract was filled at 90°C being unity (Table 5 and Table 6).

### (Analysis of aroma components)

The amount of aroma components of the respective products obtained above were measured by the SPME method (solid phase micro extraction).

The SPME method whereby 10ml of sample was taken in a 20ml headspace vial bottle, 5µl of 0.1% cyclohexanol was added as an internal standard substance, aroma components in the head space were adsorbed to the SPME fiber at 35°C for 10 minutes was conducted to measure the amounts of aroma components. Detailed conditions were as follows:
SPME fiber: manufactured by Supelco, Inc., DVB/Carboxen/PDMS
Analytical device: manufactured by Agilent Technologies, Inc., 5973N GC/MS System
Column: manufactured by Agilent Technologies, Inc., DB-WAX 60m×0.25 mmID×0.25µm, 35 to 240°C, 5°C/mi
Inlet: splitless -50°C to 240°C, 12°C/s
Gas flow rate: helium 0.9 ml/min
MS: scan mode (29 to 250 amu)

**[Table 1]**

| | Single Product | | | | |
|---|---|---|---|---|---|
| | 10°C | 30°C | 50°C | 70°C | 90°C |
| pH | 5.51 | 5.52 | 5.49 | 5.52 | 5.51 |
| Brix | 1.54 | 1.54 | 1.54 | 1.54 | 1.54 |
| Dissolved oxygen (mg/L) | 0.37 | 0.38 | 0.44 | 0.41 | 0.36 |

**[Table 2]**

| | Blended Product | | | | |
|---|---|---|---|---|---|
| | 10°C | 30°C | 50°C | 70°C | 90°C |
| pH | 5.57 | 5.56 | 5.56 | 5.57 | 5.56 |
| Brix | 1.54 | 1.54 | 1.54 | 1.54 | 1.54 |
| Dissolved oxygen (mg/L) | 0.41 | 0.42 | 0.41 | 0.39 | 0.42 |

**[Table 3]**

| | Single Product | | | | |
|---|---|---|---|---|---|
| | 10°C | 30°C | 50°C | 70°C | 90°C |
| 2-Methylfuran | 13.61 | 14.56 | 15.13 | 11.49 | 11.22 |
| 2-Methybutanal | 9.03 | 9.05 | 9.73 | 7.52 | 7.49 |
| 3-Methybutanal | 5.69 | 5.92 | 6.00 | 4.59 | 3.19 |
| 2,5-Dimethylpyrazine | 2.51 | 2.49 | 2.50 | 2.22 | 2.42 |
| 2,6-Dimethylpyrazine | 1.61 | 1.60 | 1.59 | 1.42 | 1.54 |

**[Table 4]**

| | Blended Product | | | | |
|---|---|---|---|---|---|
| | 10°C | 30°C | 50°C | 70°C | 90°C |
| 2-Methylfuran | 13.47 | 14.95 | 13.73 | 12.71 | 7.36 |
| 2-Methybutanal | 10.53 | 11.01 | 10.36 | 9.43 | 4.79 |
| 3-Methybutanal | 6.78 | 7.01 | 4.51 | 5.45 | 2.80 |
| 2,5-Dimethylpyrazine | 2.54 | 2.42 | 2.41 | 2.44 | 1.52 |
| 2,6-Dimethylpyrazine | 1.51 | 1.51 | 1.50 | 1.52 | 0.96 |

**[Table 5]**

| | Single Product | | | | |
|---|---|---|---|---|---|
| | 10°C | 30°C | 50°C | 70°C | 90°C |
| 2-Methylfuran | 1.21 | 1.30 | 1.35 | 1.02 | 1.00 |
| 2-Methybutanal | 1.21 | 1.21 | 1.30 | 1.00 | 1.00 |
| 3-Methybutanal | 1.78 | 1.86 | 1.88 | 1.44 | 1.00 |
| 2,5-Dimethylpyrazine | 1.04 | 1.03 | 1.03 | 0.92 | 1.00 |
| 2,6-Dimethylpyrazine | 1.05 | 1.04 | 1.03 | 0.92 | 1.00 |

**[Table 6]**

| | Blended Product | | | | |
|---|---|---|---|---|---|
| | 10°C | 30°C | 50°C | 70°C | 90°C |
| 2-Methylfuran | 1.15 | 1.31 | 1.18 | 1.12 | 1.00 |
| 2-Methybutanal | 1.11 | 1.24 | 1.11 | 1.11 | 1.00 |
| 3-Methybutanal | 1.10 | 1.23 | 1.11 | 1.12 | 1.00 |
| 2,5-Dimethylpyrazine | 1.04 | 1.04 | 1.04 | 1.00 | 1.00 |
| 2,6-Dimethylpyrazine | 1.05 | 1.05 | 1.04 | 1.01 | 1.00 |

Resulting from the analysis, for the three components 2-methylfuran, 2-methylbutanal and 3 methylbutanal, a tendency to start decreasing considerably was observed when the filling temperature reached 70°C or higher. For the other aroma components (2,5-dimethylpyrazine and 2,6-dimethylpyrazine were shown as representative examples), no temperature-dependent increase or decrease was observed. That is to say, the three components 2-methylfuran, 2-methylbutanal and 3 methylbutanal have properties that are different from other coffee aroma components, and such properties were so far unknown.

### Sensory examination

Five expert panelists evaluated each of the above samples for two items: (1) top aroma and (2) aftertaste. Note that those for which coffee extract was filled at 90°C were taken as references to tally how much improvement was made (Tables 7 and 8).

**[Table 7]**

| Single product | | | | | |
|---|---|---|---|---|---|
| (100% Brazil beans (L18.0)) | | | | | |
| Temperature at filling time | 10°C | 30°C | 50°C | 70°C | 90°C |
| Top aroma (flavor) | ○ | ⊚ | ⊚ | △ | - |
| Aftertaste (taste) | ○ | ○ | ⊚ | △ | - |

| | | | | | |
|---|---|---|---|---|---|
| (double circle: very good; circle: good; triangle: somewhat good; cross: no change) | | | | | |

**[Table 8]**

| Blended product | | | | | |
|---|---|---|---|---|---|
| (80% Brazil beans (L=18.0) and 20% Brazil beans (L=31.5)) | | | | | |
| Temperature at filling time | 10°C | 30°C | 50°C | 70°C | 90°C |
| Top aroma (flavor) | ○ | ⊚ | ○ | △ | - |
| Aftertaste (taste) | ○ | ○ | ○ | △ | - |

| | | | | | |
|---|---|---|---|---|---|
| (double circle: very good; circle: good; triangle: somewhat good; cross: no change) | | | | | |

In the sensory evaluation of the single product, when the filling temperature was 50°C or lower, the tendencies of (1) strong top aroma (roast aroma and fresh aroma) and (2) improvement of aftertaste were observed. In addition, completely identical results were obtained in the sensory evaluation of the blended product.

From the above results, coffee drinks containing large amounts of the three components 2-methylfuran, 2-methylbutanal and 3 methylbutanal were found to have excellent taste and flavor. As it was found that a correlation existed between a decrease in the three components 2-methylfuran, 2-methylbutanal and 3 methylbutanal, and the decrease in taste and flavor, the taste and flavor of coffee drink can be improved by preventing volatilization of or subsequently adding such aroma components during the production of the coffee drink. In addition, since no such correlation relationship was observed for other coffee aroma components (for instance, 2,5-dimethoxypyrazine and 2,6-dimethoxypyrazine), 2-methylfuran, 2-methylbutanal and 3 methylbutanal can be called special coffee aroma components.

### Example 2: Suppression effect of deterioration of coffee aroma component with age

### Sample preparation

### (Mixing)

Respectively, coffee beans for extraction comprising 100% Brazil-produced coffee beans (L=18.0) (hereinafter referred to a single product) and coffee beans for extraction in which 80% Brazil-produced coffee beans (L=18.0) and 20% Brazil-produced coffee beans (L=31.5) were blended (hereinafter referred to a blended product) have been prepared. Respectively, 400g of the above coffee beans for extraction was drip extracted at 90°C by adding 3600ml of degassed water corresponding to nine times the weight of the coffee beans to obtain 2800ml of coffee extract corresponding to seven times the weight of the coffee beans. Thereafter, the respective coffee extracts were cooled until 30°C was reached, degassed water was further added so that the coffee solid content in the coffee extract was 1.5%, 0.05 percent in weight of sodium bicarbonate was added and mixed to obtain the respective coffee mix solutions.

The respective coffee mix solutions obtained above were cooled or heated to 10°C, 30°C, 50°C, 70°C and 90°C, and after each temperature was reached, were maintained for 5 minutes, then were filled in can containers (190ml capacity) and the can containers were seemed to obtain the respective coffee drinks packed in container.

### (Sterilization)

The respective coffee drinks packed in container obtained above were retained further at room temperature for 15 minutes, then, retort sterilized at 121°C for 10 minutes. After retort sterilization and cooling to ordinary temperature, pH, Brix and quantity of dissolved oxygen of the respective products were measured (Table 9). Aroma components of the respective products were analyzed according to the analytical methods below (Table 10 and Table 11). Note that "normal product" means the respective coffee drinks packed in container prior to starting the time-course test.

**[Table 9]**

| | Single Product (normal product) | | | | |
|---|---|---|---|---|---|
| | 10°C | 30°C | 50°C | 70°C | 90°C |
| pH | 5.51 | 5.52 | 5.49 | 5.52 | 5.51 |
| Brix | 1.54 | 1.54 | 1.54 | 1.54 | 1.54 |
| Dissolved oxygen (mg/L) | 0.37 | 0.38 | 0.44 | 0.41 | 0.36 |

**[Table 10]**

| | Single Product (normal product) | | | | |
|---|---|---|---|---|---|
| | 10°C | 30°C | 50°C | 70°C | 90°C |
| 2-Methylfuran | 1.21 | 1.30 | 1.35 | 1.02 | 1.00 |
| 2-Methybutanal | 1.21 | 1.21 | 1.30 | 1.00 | 1.00 |
| 3-Methybutanal | 1.78 | 1.86 | 1.88 | 1.44 | 1.00 |
| 2,5-Dimethylpyrazine | 1.04 | 1.03 | 1.03 | 0.92 | 1.00 |
| 2,6-Dimethylpyrazine | 1.05 | 1.04 | 1.03 | 0.92 | 1.00 |

**[Table 11]**

| | Blended Product (normal product) | | | | |
|---|---|---|---|---|---|
| | 10°C | 30°C | 50°C | 70°C | 90°C |
| 2-Methylfuran | 1.15 | 1.31 | 1.18 | 1.12 | 1.00 |
| 2-Methybutanal | 1.11 | 1.24 | 1.11 | 1.11 | 1.00 |
| 3-Methybutanal | 1.10 | 1.23 | 1.11 | 1.12 | 1.00 |
| 2,5-Dimethylpyrazine | 1.04 | 1.04 | 1.04 | 1.00 | 1.00 |
| 2,6-Dimethylpyrazine | 1.05 | 1.05 | 1.04 | 1.01 | 1.00 |

### (Time-course test)

Using the respective coffee drinks packed in container (single product and blended product) obtained in Example 1 a test of deterioration with age with a storage duration of seven days was performed. In addition, the respective aroma components were analyzed according to the analysis methods described below. (Table 4, Table 5, Table 6 and Table 7). The storage temperatures during the time-course test were set to 5°C and 60°C. Samples for "Deterioration with age 60°C" were set to provoke heat deterioration, and samples for "Deterioration with age 5°C" were set to not provoke heat deterioration.

The SPME method whereby 10ml of sample was taken in a 20ml headspace vial bottle, 5µl of 0.1% cyclohexanol was added as an internal standard substance, aroma components in the head space were adsorbed to the SPME fiber at 35°C for 10 minutes was conducted to measure the amounts of aroma components. Detailed conditions were as follows:
SPME fiber: manufactured by Supelco, Inc., DVB/Carboxen/PDMS
Analytical device: manufactured by Agilent Technologies, Inc., 5973N GC/MS
System
Column: manufactured by Agilent Technologies, Inc., DB-WAX 60m×0.25 mmlD×0.25µm, 35 to 240°C, 5°C/mi
Inlet: splitless -50°C to 240°C, 12°C/s
Gas flow rate: helium 0.9 ml/min
MS: scan mode (29 to 250 amu)

**[Table 12]**

| | Single product (deterioration with age 5°C) | | | | |
|---|---|---|---|---|---|
| | 10°C | 30°C | 50°C | 70°C | 90°C |
| 2-Methylfuran | 1.18 | 1.27 | 1.09 | 1.06 | 1.00 |
| 2-Methybutanal | 1.08 | 1.10 | 1.02 | 0.97 | 1.00 |
| 3-Methybutanal | 1.08 | 1.12 | 1.02 | 0.97 | 1.00 |
| 2,5-Dimethylpyrazine | 0.87 | 0.88 | 0.89 | 0.88 | 1.00 |
| 2,6-Dimethylpyrazine | 0.87 | 0.88 | 0.89 | 0.88 | 1.00 |

**[Table 13]**

| | Blended product (deterioration with age 5°C) | | | | |
|---|---|---|---|---|---|
| | 10°C | 30°C | 50°C | 70°C | 90°C |
| 2-Methylfuran | 1.15 | 1.31 | 1.18 | 1.12 | 1.00 |
| 2-Methybutanal | 1.11 | 1.24 | 1.11 | 1.11 | 1.00 |
| 3-Methybutanal | 1.10 | 1.23 | 1.11 | 1.12 | 1.00 |
| 2,5-Dimethylpyrazine | 1.04 | 1.04 | 1.04 | 1.00 | 1.00 |
| 2,6-Dimethylpyrazine | 1.05 | 1.05 | 1.04 | 1.01 | 1.00 |

### (Discussion)

In regard to the extent of decrease in 2-methylfuran, 2-methylbutanal and 3-methylbutanal, which are aroma components in the sample (single product) of "Deterioration with age 5°C", when compared to the peak area surface for the liquid temperature of 90°C at filling as the reference (1.00), the relative values of the peak area surfaces for the filling liquid temperatures of 10°C, 30°C, 50°C and 70°C were in the range of 0.97 to 1.27. Meanwhile, when measured similarly for 2,5-dimethylpyrazine and 2,6-dimethylpyrazine, the relative values of the peak area surfaces for the filling liquid temperatures of 10°C, 30°C, 50°C and 70°C were in the range of 0.87 to 0.89, which were lower compared to the relative values obtained for 2-methylfuran, 2-methylbutanal and 3-methylbutanal. This indicates that the aroma components do not necessarily remain when filling is at 10 to 70°C. That is to say, it was found that, regarding 2,5-dimethylpyrazine and 2,6-dimethylpyrazine, when the coffee drinks were filled at 10 to 70°C, the extents of the decrease were large compared to the coffee drink wiith a filling temperature of 90°C, but regarding 2-methylfuran, 2-methylbutanal and 3-methylbutanal, when the coffee drinks were filled at 10 to 70°C, there were almost no differences or more remained compared to the case where filling temperature was 90°C.

In addition, in regard to the extent of decrease in 2-methylfuran, 2-methylbutanal and 3-methylbutanal, which are aroma components in the sample (blended product) of "Deterioration with age 5°C", when compared to the peak area surface for the liquid temperature of 90°C at filling as the reference (1.00), the relative values of the peak area surfaces for the filling liquid temperatures of 10°C, 30°C, 50°C and 70°C were in the range of 1.10 to 1.31, such that relatively more aroma components were remaining compared to when the filling temperature was 90°C. Meanwhile, when measured similarly for 2,5-dimethylpyrazine and 2,6-dimethylpyrazine, the relative values of the peak area surfaces for the liquid temperatures of 10°C, 30°C, 50°C and 70°C at filling were in the range of 1.00 to 1.05, such that there were almost no differences compared to the case when the filling temperature was 90°C.

**[Table 14]**

| | Single product (deterioration with age 60°C) | | | | |
|---|---|---|---|---|---|
| | 10°C | 30°C | 50°C | 70°C | 90°C |
| 2-Methylfuran | 1.32 | 1.51 | 1.32 | 1.20 | 1.00 |
| 2-Methybutanal | 1.29 | 1.37 | 1.23 | 1.13 | 1.00 |
| 3-Methybutanal | 1.34 | 1.38 | 1.22 | 1.11 | 1.00 |
| 2,5-Dimethylpyrazine | 0.98 | 1.00 | 1.04 | 1.05 | 1.00 |
| 2,6-Dimethylpyrazine | 0.99 | 1.00 | 1.04 | 1.05 | 1.00 |

**[Table 15]**

| | Blended product (deterioration with age 60°C) | | | | |
|---|---|---|---|---|---|
| | 10°C | 30°C | 50°C | 70°C | 90°C |
| 2-Methylfuran | 1.21 | 1.43 | 1.28 | 1.19 | 1.00 |
| 2-Methybutanal | 1.13 | 1.28 | 1.21 | 1.11 | 1.00 |
| 3-Methybutanal | 1.11 | 1.27 | 1.18 | 1.10 | 1.00 |
| 2,5-Dimethylpyrazine | 1.07 | 1.07 | 1.03 | 1.03 | 1.00 |
| 2,6-Dimethylpyrazine | 1.06 | 1.05 | 1.03 | 1.02 | 1.00 |

### (Discussion)

In regard to the extent of decrease in 2-methylfuran, 2-methylbutanal and 3-methylbutanal, which are aroma components in the sample (single product) of "Deterioration with age 60°C", when compared to the peak area surface for the liquid temperature of 90°C at filling time as the reference (1.00), the relative values of the peak area surfaces for the liquid temperatures of 10°C, 30°C, 50°C and 70°C at filling time were in the range of 1.11 to 1.51, such that relatively more aroma components were remaining compared to when the filling temperature was 90°C. Meanwhile, when measured similarly for 2,5-dimethylpyrazine and 2,6-dimethylpyrazine, the relative values of the peak area surfaces for the liquid temperatures of 10°C, 30°C, 50°C and 70°C at filling were in the range of 0.98 to 1.05, such that there were almost no differences in the relative residual ratio of the aroma components compared to the case when the filling temperature was 90°C.

In the sample (blended product) of "Deterioration with age 60°C", in regard to the extent of decrease in 2-methylfuran, 2-methylbutanal and 3₋methylbutanal, which are aroma components, when compared to the peak area surface for the liquid temperature of 90°C at filling time as the reference (1.00), the relative values of the peak area surfaces for the liquid temperatures of 10°C, 30°C, 50°C and 70°C at filling time were in the range of 1.10 to 1.43, such that, relatively, somewhat more aroma components were remaining compared to when the filling temperature was 90°C. Meanwhile, when measured similarly for 2,5-dimethylpyrazine and 2,6-dimethylpyrazine, the relative values of the peak area surfaces for the liquid temperatures of 10°C, 30°C, 50°C and 70°C at filling were in the range of 1.02 to 1.07, such that there were almost no differences in relative residual ratio of the aroma components compared to the case when the filling temperature was 90°C

From the above, compared to "Deterioration with age 5°C", in "Deterioration with age 60°C", when the filling temperatures were 10°C, 30°C, 50°C and 70°C, 2-methylfuran, 2-methylbutanal and 3-methylbutanal, which are aroma components, did not decrease and large amount were remaining compared to the case where the filling temperature was 90°C. Meanwhile, regarding 2,5-dimethylpyrazine and 2,6-dimethylpyrazine, which are aroma components, when the filling temperatures were 10°C, 30°C, 50°C and 70°C, there were almost no differences in the remaining quantities compared to the case where the filling temperature was 90°C.

### (Sensory examination)

Five expert panelists evaluated each of the above samples for deterioration with age on following three items: (1) top aroma, (2) aftertaste and (3) overall evaluation (Table 8 and Table 9). The overall evaluations for "Deterioration with age 5°C" were all "EXTREMELY GOOD". However, with the samples (single product) of "Deterioration with age 60°C", the overall evaluations were "BAD" for the coffee drinks packed in container from the 70°C fill and the 90°C fill, while the overall evaluations were "PASS" for the coffee drinks packed in container from 10°C, 30°C and 50°C fills. In addition, similar results were obtained regarding aftertaste as well. Note that regarding the top flavor, the same results as for the aftertaste were obtained, with the exception of "GOOD" for the 10°C and 30°C fills.

In addition, regarding the samples (blended product), with "Deterioration with age 60°C", the overall evaluations were "PASS" for the coffee drinks packed in container from the 70°C fill and the 90°C fill, while the overall evaluations were "GOOD" for the coffee drinks packed in container from 10°C, 30°C and 50°C fills. In addition, regarding aftertaste, in contrast to the coffee drinks packed in container from the 70°C fill and the 90°C fill, which were "BAD" , the coffee drink packed in containers from 10°C, 30°C and 50°C fills were "GOOD". Note that regarding the top flavor, the same results as for the aftertaste were obtained, with the exception of "GOOD" for the 10°C and 30°C fills.

**[Table 16]**

| Sample | Filling temperature | Sensory evaluation | | |
|---|---|---|---|---|
| | | Evaluation item | Deterioration with age 5°C | Deterioration with age 60°C |
| Single product | | Top aroma | ⊚ | ○ |
| | 10°C | Aftertaste | ○ | △ |
| | | Overall evaluation | ⊚ | △ |
| | | Top aroma | ⊚ | ○ |
| | 30°C | Aftertaste | ○ | △ |
| | | Overall evaluation | ⊚ | △ |
| | | Top aroma | ○ | △ |
| | 50°C | Aftertaste | ○ | △ |
| | | Overall evaluation | ⊚ | △ |
| | | Top aroma | △ | X |
| | 70°C | Aftertaste | △ | X |
| | | Overall evaluation | ⊚ | X |
| | | Top aroma | △ | X |
| | 90°C | Aftertaste | △ | X |
| | | Overall evaluation | ⊚ | X |

**[Table 17]**

| Sample | Filling temperature | Sensory evaluation | | |
|---|---|---|---|---|
| | | Evaluation item | Deterioration with age 5°C | Deterioration with age 60°C |
| Blended product | | Top aroma | ⊚ | ○ |
| | 10°C | Aftertaste | ○ | △ |
| | | Overall evaluation | ⊚ | ○ |
| | | Top aroma | ⊚ | ○ |
| | 30°C | Aftertaste | ○ | △ |
| | | Overall evaluation | ⊚ | ○ |
| | | Top aroma | ○ | △ |
| | 50°C | Aftertaste | ○ | △ |
| | | Overall evaluation | ⊚ | ○ |
| | | Top aroma | △ | X |
| | 70°C | Aftertaste | △ | X |
| | | Overall evaluation | ⊚ | △ |
| | | Top aroma | △ | X |
| | 90°C | Aftertaste | △ | X |
| | | Overall evaluation | ⊚ | △ |

| | |
|---|---|
| Double circle | VERY GOOD |
| Circle | GOOD |
| Triangle | PASS |
| Cross | BAD |

From the above sensory examination results for "Deterioration with age 60°C", in contrast to the coffee drink packed in containers from the 70°C fill and the 90°C fill being susceptible to deterioration with age, the coffee drinks packed in container from the 10°C, 30°C and 50°C fills were found to resist deterioration with age.

Here, considering together the results for the remaining quantities of aroma components and the sensory examination results, it was found that the coffee drink packed in container from the 70°C fill and the 90°C fill had the three components: 2-methylfuran, 2-methylbutanal and 3 methylbutanal decreased compared to the coffee drinks packed in container from the 10°C, 30°C and 50°C fills, and were susceptible to deterioration with age. In contrast, the coffee drink packed in containers from the 10°C, 30°C and 50°C fills had large amounts of the three components: 2-methylfuran, 2-methylbutanal and 3 methylbutanal remaining, and deterioration with age was suppressed. In view of the above results, a correlation relationship was found to exist between the remaining quantity of 2-methylfuran, 2-methylbutanal and 3 methylbutanal, and deterioration with age.

## Claims

1. A coffee drink packed in container containing 2-methylfuran, 2-methylbutanal and 3-methylbutanal and having improved taste and flavor.

2. A coffee drink packed in container containing 11.5 to 15.5 of 2-methylfuran, 7.5 to 11.0 of 2-methylbutanal and 4.5 to 7.0 of 3-methylbutanal in relative ratios when the peak surface of the internal standard substance (5µl of 0.1 % cyclohexanol) is unity in the SPME method.

3. The coffee drink packed in container as recited in Claim 1 or 2, wherein, in the step of filling a container with a coffee drink, the container is filled at a liquid temperature of coffee drink in the range of 10 to 70°C, and the quantity of dissolved oxygen in the coffee drink packed in container is 0.37 to 0.44mg/L.

4. A producing method for a coffee drink packed in container whereby a container is filled at a liquid temperature of coffee drink in the range of 10 to 70°C to suppress deterioration of aroma components.

5. A producing method for a coffee drink packed in container wherein the aroma component is one species or two species or more chosen from the group comprising 2-methylfuran, 2-methylbutanal and 3-methylbutanal.

6. A method whereby, in the step of filling a container with a coffee drink, the container is filled at a liquid temperature of coffee drink in the range of 10 to 70°C, and the quantity of dissolved oxygen of the coffee drink packed in container is brought to 0.37 to 0.44mg/L to improve the taste and flavor of a coffee drink.

7. A method for suppressing deterioration of a coffee drink packed in container, whereby a container is filled at a liquid temperature of the coffee drink in the range of 10 to 70°C.
